# EUROPEAN PATENT SPECIFICATION

(11) **EP 3 592 525 B1**
(45) Date of publication and mention of the grant of the patent: **13.04.2022**
(21) Application number: 17714050.6
(22) Date of filing: 07.03.2017
(51) Int. Cl.: B29C 45/16, B29C 45/73

(54) **TWO SHOT INJECTION MOLDING PROCESS FOR THERMOPLASTIC PARTS**
ZWEISTUFIGES SPRITZGIESSVERFAHREN FÜR THERMOPLASTISCHE TEILE
PROCESSUS DE MOULAGE PAR INJECTION À DEUX COUPS POUR PIÈCES THERMOPLASTIQUES

(43) Date of publication of application: 15.01.2020
(73) Proprietor: Covestro LLC, Pittsburgh, PA 15205 (US)
(72) Inventor: LORENZO, James, Mars, Pennsylvania 16046 (US); ROBBINS, James, Portland, Michigan 48875 (US); MCCANNA, Jessee, Midland, Pennsylvania 15059 (US); DAVIS, Terry, Kimball, Michigan 48074 (US)
(74) Representative: Levpat
(86) International application number: PCT/US2017/021038
(87) International publication number: WO 2018/164666

(56) References cited:
- EP-A2- 2 594 392
- WO-A1-2011/161241
- US-A1- 2013 265 776

## Description

### FIELD OF THE INVENTION

The present invention relates to injection molding of thermoplastic parts, comprising two different thermoplastics.

### SUMMARY OF THE INVENTION

An embodiment of the invention describes a process to manufacture a molded thermoplastic part by injection molding, the process comprising: heating the mold cavity surface to a temperature greater than 70 °C; injecting a first polymer into a mold at a cavity surface temperature Ti1, the first polymer having a melt temperature Tm1 and a thermal conductivity Tc1; injecting a second polymer into the mold at a cavity surface temperature Ti2, the second polymer having a melt temperature Tm2 and a thermal conductivity Tc2; and cooling the mold to a temperature less than Tm1, and wherein Tc2 is greater than Tc1.

In another embodiment of the invention, first polymer has a Vicat temperature Tv1, and Ti1 is between Tv1 - 40 °C and Tv1 + 40 °C , preferably between Tv1 - 20 °C and Tv1 + 20 °C. In another, the second polym er has a Vicat temperature Tv2, and Ti2 is between Tv2 - 40 °C and Tv2 + 40 °C , preferably between Tv2 - 20 °C and Tv2 + 20 °C.

In still another embodiment, Ti1 is between 70 °C a nd 100 °C, preferably 80 °C and 100 °C. In a different embodiment, the cavity p ressure is between 10 and 200 MPa, preferably between 20 and 150 MPa. In still another, the first polymer is injected at a speed ranging from 25 mm/ sec to 200 mm/ sec. In yet another embodiment, Tm2 is between 200 °C and 400 °C, prefe rably 250 °C and 340 °C. In a different embodiment not yet disclosed, the thermal conductivity of the first polymer is 0.1 to 0.3 W/ m-K. In still another one, the thermal conductivity of the second polymer is 1 to 40 W/ m-K.

In a more embodiments of the invention, the first and/or second polymer is a composition that comprises a compound selected from the group consisting of: polycarbonate and acrylonitrile butadiene styrene, in an amount greater than any other compound. In still more embodiments, the first and/or second polymer is a composition that comprises a compound selected from the group consisting of: polycarbonate, acrylonitrile butadiene styrene, polybutylene terephthalate, thermoplastic polyurethane, polymethyl methacrylate and polyethylene terephthalate, in an amount greater than any other compound. In another embodiment, there is no cooling step between injecting the first polymer and injecting the second polymer.

In an embodiment not yet disclosed, the first polymer comprises: A) 30 - 100 parts by wt., preferably 40 - 90 parts by wt., particularly preferably 50 - 85 parts by wt. of aromatic polycarbonate and/or aromatic polyester carbonate, preferably polycarbonate, B) 0 - 50 parts by wt., preferably 0 - 40.0 parts by wt., particularly preferably 5.0 - 20.0 parts by wt. of rubber-modified graft polymer and/or vinyl copolymer, C) 0 - 50.0 parts by wt., preferably 0 - 30.0 parts by wt., particularly preferably 10.0 - 25.0 parts by wt. of polyester, preferably polybutylene terephthalate or polyethylene terephthalate, D) 5.0 - 50.0 parts by wt., preferably 10.0 - 30.0 parts by wt., particularly preferably 15.0 to 25.0 parts by wt. of inorganic filler with a grain shape chosen from the group which includes spherical / cubic, tabular / discus-shaped and lamellar geometries, E) 0 - 5.0 parts by wt., preferably 0.5 - 3.0 parts by wt., particularly preferably 0.75 - 1.25 parts by wt. of further conventional polymer additives, wherein all the parts by weight stated above are standardized such that the sum of the parts by weight of all components A+B+C+D+E in the composition is 100.

In still another embodiment, the second polymer comprises: F) at least one semicrystalline thermoplastic is present in an amount ranging from 90 wt.% to 30 wt.% of the composition of the second polymer, more preferably from 80 wt.% to 40 wt.% and most preferably from 70 wt.% to 50 wt.%, G) a thermally conductive additive present in an amount ranging from 10 wt.% to 70 wt.% of the composition of the present invention, more preferably from 20 wt.% to 60 wt.% and most preferably from 30 wt.% to 50 wt.%, H) optionally, a flow enhancer in an amount ranging from 0.2 wt.% to 3.0 wt.%, preferably 0.2 to 2.5 wt.%, particularly preferably 0.2 to 2.0 wt.%, very particularly preferably 0.2 to 1.8 wt.%, I) optionally, 0 to 1.0 wt.% of a heat stabilizer and/or transesterification stabilizer, J) optionally, a phosphorus compound, in an amount of 0.5 to 10 wt.%, preferably 6.0 to 10.0 wt.%, more preferably 6.0 to 9.0 wt.%, most preferably 5.0 to 7.0 wt.%, and K) optionally, an ethylene/alkyl (meth)acrylate copolymer in an amount of 0.01 to 5 wt.%, preferably 2 to 4.5 wt.%, very preferably 3 to 4 wt.%.

In yet another embodiment of the invention, Component F is aromatic polycarbonate, present in an amount ranging from 20 to 94.8 wt%, preferably 60 to 89.8 wt%, particularly preferably 65 to 85 wt%. In still another, Component G is graphite, preferably expanded graphite, present in an amount ranging from 5 to 40 wt%, preferably 10 to 35 wt%, particularly preferably 15 to 35 wt%, very particularly preferably 20 to 25 wt%. In a different embodiment, at least 90% of the particles of the expanded graphite have a particle size of at least 200 microns. In another different embodiment, Component H is selected from the group consisting of diglycerol ester and glycerol monostearate. In yet another different embodiment, the second polymer further comprises 0 to 10.0 wt% of one or more further additives selected from the group consisting of demolding agents, flame retardants, anti-dripping agents, antioxidants, inorganic pigments, carbon black, dyes, inorganic fillers, titanium dioxide, silicates, talc and barium sulfate.

### DESCRIPTION OF THE INVENTION

Injection molding processes are known in the art, to create molded parts from thermoplastic resins. In such processes, a thermoplastic resin is melted, and injected into a mold, or "shot" into a mold, where the solid part is shaped by the contours of the mold. Two shot injection molding processes have historically existed to allow two different thermoplastic resins, to be included in one mold. The first thermoplastic is injected, and then allowed to cool. Then, the second thermoplastic is injected into the mold, and is molded against the first (cooled) thermoplastic, in addition to being molded against the contours of the mold. The second shot thermoplastic is shaped by the contours of the first (cooled) thermoplastic to enter the mold. This method has several advantages, including creating two separate molded parts, whose outer surfaces have even flat or shaped surfaces to fit together. However, there are limitations having only even surfaces separating two molded thermoplastics. For example, during the cooling process for the second shot, the material may peel away from the first shot material as it shrinks and cools, limiting the ability for thermal transfer to take place across the surfaces. Also, thermal transfer across an even surface is limited by that surface area, which is often the minimum surface area possible, given the space available for the two materials to meet. As described herein, to overcome this limitation, thermoplastic blends are molded into each other while still hot, with the second shot material having a higher thermal conductivity than the first shot material. In this way, an uneven surface is created between the two materials, which then cool together, promoting adhesion between the surfaces. Also, a larger surface area is created for better thermal transfer between the two materials.

In one application of the inventive process, an automotive headlamp comprises a first thermoplastic composition having a high surface quality for a reflector, and a second thermoplastic composition having a high thermal conductivity for a heat sink. Two separate compositions are used, because thermoplastic compositions that have a high thermal conductivity generally contain particles that negatively impact surface quality. When the article molded using the process described herein, is used in a headlamp, the high thermal conductivity portion of the molded part can more efficiently conduct heat transfer, because the thermally conductive thermoplastic has more surface area and better adhesion to the high surface quality thermoplastic, rather than all heat having to transfer across an surface between the two materials, which may also contain gaps due to lack of adhesion.

While the compositions and products described below may be used in an injection molding process to create an automotive headlamp, the invention is not so limited. Rather, there are many different products that can benefit from the process described herein.

### 1. Thermoplastic Compositions

Thermoplastic compositions used in association with the present invention may comprise one or more of the following components. The components are then combined into compositions, as they described below. Thermoplastic compositions for reflector materials are described in US Pat. Pub. No. 2014/0356551 Thermally conductive materials are described in U.S. Pat. Nos. 6,048,919 and 7,235,918; U.S. Pat. App. Pub. Nos. 2005/0272845, 2008/0287585, 2010/0072416 and 2017/0002247; and also published international applications WO 2009/115512, WO 2011/013645 and WO 2017/005735, further relevant prior art is EP 2 594 392 A2, US 2013/265776 A1 and WO 2011/161241 A1.

### A. Polycarbonates

The process of the present invention utilizes thermoplastic compositions such as ones comprising polycarbonate resins, and optionally copolymers and additives. Suitable polycarbonate resins include homopolycarbonates and copolycarbonates, both linear or branched resins and mixtures thereof. Polycarbonates in the context of the present invention are either homopolycarbonates or copolycarbonates and/or polyestercarbonates; the polycarbonates may, in a known manner, be linear or branched. According to the invention, it is also possible to use mixtures of polycarbonates.

A portion of up to 80 mol%, preferably of 20 mol% up to 50 mol%, of the carbonate groups in the polycarbonates used in accordance with the invention may be replaced by aromatic dicarboxylic ester groups. Polycarbonates of this kind, incorporating both acid radicals from the carbonic acid and acid radicals from aromatic dicarboxylic acids in the molecule chain, are referred to as aromatic polyestercarbonates. In the context of the present invention, they are encompassed by the umbrella term of the thermoplastic aromatic polycarbonates. The polycarbonates are prepared in a known manner from bishydroxyaryl compounds, carbonic acid derivatives, optionally chain terminators and optionally branching agents, with preparation of the polyestercarbonates by replacing a portion of the carbonic acid derivatives with aromatic dicarboxylic acids or derivatives of the dicarboxylic acids, according to the carbonate structural units to be replaced in the aromatic polycarbonates by aromatic dicarboxylic ester structural units.

Dihydroxyaryl compounds suitable for the preparation of polycarbonates are those of the formula (2)

HO-Z-OH (2),

in which
- Z: is an aromatic radical which has 6 to 30 carbon atoms and may contain one or more aromatic rings, may be substituted and may contain aliphatic or cycloaliphatic radicals or alkylaryls or heteroatoms as bridging elements.

Preferably, Z in formula (2) is a radical of the formula (3) 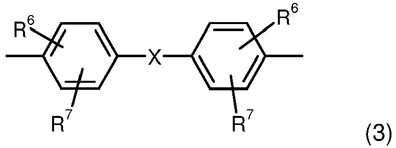 in which
- R⁶ and R⁷: are each independently H, C₁- to C₁₈-alkyl-, C₁- to C₁₈-alkoxy, halogen such as Cl or Br or in each case optionally substituted aryl or aralkyl, preferably H or C₁- to C₁₂-alkyl, more preferably H or C₁-to Cs-alkyl and most preferably H or methyl, and
- X: is a single bond, -SO₂-, -CO-, -O-, -S-, C₁- to C₆-alkylene, C₂- to C₅-alkylidene or C₅- to C₆-cycloalkylidene which may be substituted by C₁- to C₆-alkyl, preferably methyl or ethyl, or else C₆- to C₁₂-arylene which may optionally be fused to further aromatic rings containing heteroatoms.

Preferably, X is a single bond, C₁- to C₅-alkylene, C₂- to C₅-alkylidene, C₅- to C₆-cycloalkylidene, -O-, -SO-, -CO-, -S-, -SO₂-
or a radical of the formula (3a)

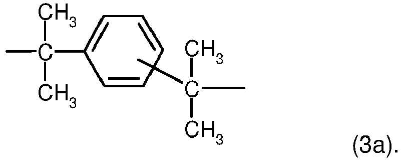

Examples of dihydroxyaryl compounds (diphenols) are: dihydroxybenzenes, dihydroxydiphenyls, bis(hydroxyphenyl)alkanes, bis(hydroxyphenyl)cycloalkanes, bis(hydroxyphenyl)aryls, bis(hydroxyphenyl) ethers, bis(hydroxyphenyl) ketones, bis(hydroxyphenyl) sulphides, bis(hydroxyphenyl) sulphones, bis(hydroxyphenyl) sulphoxides, 1,1'-bis(hydroxyphenyl)diisopropylbenzenes and the ring-alkylated and ring-halogenated compounds thereof.

Examples of bishydroxyaryl compounds suitable for the preparation of the polycarbonates for use in accordance with the invention include hydroquinone, resorcinol, dihydroxydiphenyl, bis(hydroxyphenyl)alkanes, bis(hydroxyphenyl)cycloalkanes, bis(hydroxyphenyl) sulphides, bis(hydroxyphenyl) ethers, bis(hydroxyphenyl) ketones, bis(hydroxyphenyl) sulphones, bis(hydroxyphenyl) sulphoxides, α,α'-bis(hydroxyphenyl)diiso-propylbenzenes and the alkylated, ring-alkylated and ring-halogenated compounds thereof.

Preferred bishydroxyaryl compounds are 4,4'-dihydroxydiphenyl, 2,2-bis(4-hydroxyphenyl)-1-phenylpropane, 1,1-bis(4-hydroxyphenyl)phenylethane, 2,2-bis(4-hydroxyphenyl)propane, 2,4-bis(4-hydroxyphenyl)-2-methylbutane, 1,3-bis[2-(4-hydroxyphenyl)-2-propyl]benzene (bisphenol M), 2,2-bis(3-methyl-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl) sulphone, 2,4-bis(3,5-dimethyl-4-hydroxyphenyl)-2-methylbutane, 1,3-bis[2-(3,5-dimethyl-4-hydroxyphenyl)-2-propyl]benzene and 1,1-bis(4-hydroxyphenyl)-3,3,5-trimethylcyclohexane (bisphenol TMC).

Additional preferred bishydroxylaryl compounds include at least one monomer unit derived from a bis-(4-hydroxyphenyl) compound, which is bridged via the 1,1'-position of a cyclic hydrocarbon optionally substituted by heteroatoms, preferably one via the 1,1'- (1a), (1b), (1c) and (1d), more preferably a monomer unit bridged over the 1,1'-position of a cyclic hydrocarbon, which is described by the general formula (1a): 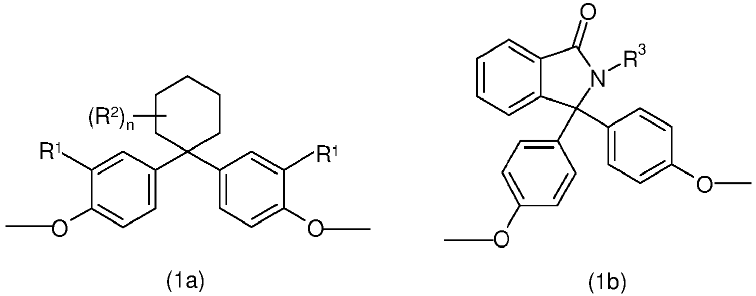 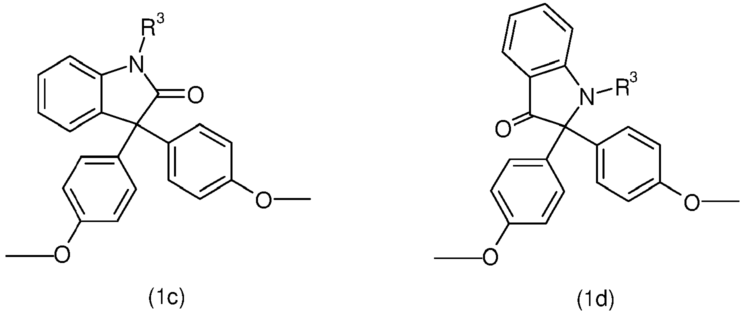 in which:
R¹ is hydrogen or C1-C4-alkyl, preferably hydrogen,
R² is C1-C4-alkyl, preferably methyl,
N is 0, 1, 2 or 3, preferably 3, and
R³ is C1-C4-alkyl, aralkyl or aryl, preferably methyl or phenyl, very particularly preferably phenyl.

Particularly preferred bishydroxyaryl compounds are 4,4'-dihydroxydiphenyl, 1,1-bis(4-hydroxyphenyl)phenylethane, 2,2-bis(4-hydroxyphenyl)propane, 2,2-bis(3,5-dimethyl-4-hydroxyphenyl)propane, 1,1-bis(4-hydroxyphenyl)cyclohexane and 1,1-bis(4-hydroxyphenyl)-3,3,5-trimethylcyclohexane (bisphenol TMC).

These and further suitable bishydroxyaryl compounds are described, for example, in US 2 999 835 A, 3 148 172 A, 2 991 273 A, 3 271 367 A, 4 982 014 A and 2 999 846 A, in German published specifications 1 570 703 A, 2 063 050 A, 2 036 052 A, 2 211 956 A and 3 832 396 A, in French patent 1 561 518 A1, in the monograph "H. Schnell, Chemistry and Physics of Polycarbonates, Interscience Publishers, New York 1964, p. 28 ff.; p.102 ff.", and in "D.G. Legrand, J.T. Bendler, Handbook of Polycarbonate Science and Technology, Marcel Dekker New York 2000, p. 72ff."

Only one bishydroxyaryl compound is used in the case of the homopolycarbonates; two or more bishydroxyaryl compounds are used in the case of copolycarbonates. The bishydroxyaryl compounds employed, similarly to all other chemicals and assistants added to the synthesis, may be contaminated with the contaminants from their own synthesis, handling and storage. However, it is desirable to employ the purest possible raw materials.

The monofunctional chain terminators needed to regulate the molecular weight, such as phenols or alkylphenols, especially phenol, p-tert-butylphenol, isooctylphenol, cumylphenol, the chlorocarbonic esters thereof or acid chlorides of monocarboxylic acids or mixtures of these chain terminators, are either supplied to the reaction together with the bisphenoxide(s) or else added to the synthesis at any time, provided that phosgene or chlorocarbonic acid end groups are still present in the reaction mixture, or, in the case of the acid chlorides and chlorocarbonic esters as chain terminators, provided that sufficient phenolic end groups of the polymer being formed are available. Preferably, the chain terminator(s), however, is/are added after the phosgenation at a site or at a time when no phosgene is present any longer but the catalyst has still not been metered in, or are metered in prior to the catalyst, together with the catalyst or in parallel.

Any branching agents or branching agent mixtures to be used are added to the synthesis in the same manner, but typically before the chain terminators. Typically, trisphenols, quaterphenols or acid chlorides of tri- or tetracarboxylic acids are used, or else mixtures of the polyphenols or of the acid chlorides.

Some of the compounds having three or more than three phenolic hydroxyl groups that are usable as branching agents are, for example, phloroglucinol, 4,6-dimethyl-2,4,6-tri(4-hydroxyphenyl)hept-2-ene, 4,6-dimethyl-2,4,6-tri-(4-hydroxyphenyl)heptane, 1,3,5-tris(4-hydroxyphenyl)benzene, 1,1,1-tri-(4-hydroxyphenyl)ethane, tris(4-hydroxyphenyl)phenylmethane, 2,2-bis[4,4-bis(4-hydroxyphenyl)cyclohexyl]propane, 2,4-bis(4-hydroxyphenylisopropyl)phenol, tetra(4-hydroxyphenyl)methane.

Some of the other trifunctional compounds are 2,4-dihydroxybenzoic acid, trimesic acid, cyanuric chloride and 3,3-bis(3-methyl-4-hydroxyphenyl)-2-oxo-2,3-dihydroindole.

Preferred branching agents are 3,3-bis(3-methyl-4-hydroxyphenyl)-2-oxo-2,3-dihydroindole and 1,1,1-tri(4-hydroxyphenyl)ethane.

The amount of any branching agents to be used is 0.05 mol% to 2 mol%, again based on moles of bishydroxyaryl compounds used in each case.

The branching agents can either be initially charged together with the bishydroxyaryl compounds and the chain terminators in the aqueous alkaline phase or added dissolved in an organic solvent prior to the phosgenation.

All these measures for preparation of the polycarbonates are familiar to those skilled in the art.

Aromatic dicarboxylic acids suitable for the preparation of the polyestercarbonates are, for example, orthophthalic acid, terephthalic acid, isophthalic acid, tert-butylisophthalic acid, 3,3'-diphenyldicarboxylic acid, 4,4'-diphenyldicarboxylic acid, 4,4-benzophenonedicarboxylic acid, 3,4'-benzophenonedicarboxylic acid, 4,4'-diphenyl ether dicarboxylic acid, 4,4'-diphenyl sulphone dicarboxylic acid, 2,2-bis(4-carboxyphenyl)propane, trimethyl-3-phenylindane-4,5'-dicarboxylic acid.

Among the aromatic dicarboxylic acids, particular preference is given to using terephthalic acid and/or isophthalic acid.

Derivatives of the dicarboxylic acids are the dicarbonyl dihalides and the dialkyl dicarboxylates, especially the dicarbonyl dichlorides and the dimethyl dicarboxylates.

The replacement of the carbonate groups by the aromatic dicarboxylic ester groups proceeds essentially stoichiometrically and also quantitatively, and so the molar ratio of the co-reactants is reflected in the final polyester carbonate. The aromatic dicarboxylic ester groups can be incorporated either randomly or in blocks.

Preferred modes of preparation of the polycarbonates for use in accordance with the invention, including the polyestercarbonates, are the known interfacial process and the known melt transesterification process (cf. e.g. WO 2004/063249 A1, WO 2001/05866 A1, WO 2000/105867, US 5,340,905 A, US 5,097,002 A, US 5,717,057 A).

In the first case, the acid derivatives used are preferably phosgene and optionally dicarbonyl dichlorides; in the latter case, they are preferably diphenyl carbonate and optionally dicarboxylic diesters. Catalysts, solvents, workup, reaction conditions etc. for the polycarbonate preparation or polyestercarbonate preparation have been described and are known to a sufficient degree in both cases.

The technique employed to determine the molecular weight of polycarbonate is gel-permeation chromatography (GPC) using polystyrene calibration standards. A Waters Alliance 2695 GPC with refractive index (RI) detection is employed for these analyses. The GPC is controlled, data collected, and data analyzed by Waters Empower chromatography software. The columns employed include three 30 cm SDVB PL Gel Mixed E columns with a 5 µm 2-Mixed D guard column. The mobile phase is tetrahydrofuran (THF). Toluene is used for elution-time correction. The flow rate is 1.0 mL/min. at 35 °C, with a run-time of 40 min. Polystyrene calibration standards are used as primary calibrators and CD-2000, 2450 and 3400 are employed as secondary standards. The sample injection volume is 75 µL with a sample concentration of 2.5 mg/mL.

The thermoplastic composition may also include a copolymer, along with additional vinyl monomers such as vinyl aromatic compounds and/or vinyl aromatic compounds substituted on the ring (such as styrene, α-methylstyrene, p-methylstyrene, p-chlorostyrene), methacrylic acid (C₁-C₈)-alkyl esters (such as methyl methacrylate, ethyl methacrylate, 2-ethylhexyl methacrylate, allyl methacrylate), acrylic acid (C₁-C₈)-alkyl esters (such as methyl acrylate, ethyl acrylate, n-butyl acrylate, tert-butyl acrylate), polybutadienes, butadiene/styrene or butadiene/acrylonitrile copolymers, polyisobutenes or polyisoprenes grafted with alkyl acrylates or methacrylates, vinyl acetate, acrylonitrile and/or other alkyl styrenes, organic acids (such as acrylic acid, methacrylic acid) and/or vinyl cyanides (such as acrylonitrile and methacrylonitrile) and/or derivatives (such as anhydrides and imides) of unsaturated carboxylic acids (for example maleic anhydride and N-phenyl-maleimide). These vinyl monomers can be used on their own or in mixtures of at least two monomers. Preferred monomers in the copolymer can be selected from at least one of the monomers styrene, methyl methacrylate, n-butyl acrylate and acrylonitrile butadiene styrene.

The thermoplastic composition may optionally comprise one or more further commercially available polymer additives such as flame retardants, flame retardant synergists, anti-dripping agents (for example compounds of the substance classes of the fluorinated polyolefins, of the silicones as well as aramid fibers), lubricants and mold release agents (for example pentaerythritol tetrastearate), nucleating agents, stabilizers, antistatic agents (for example conductive blacks, carbon fibers, carbon nanotubes as well as organic antistatic agents such as polyalkylene ethers, alkylsulfonates or polyamide-containing polymers), as well as colorants and pigments.

### B. Graft copolymers

Component B includes one or more graft polymers of
B.1 5 to 95, preferably 20 to 90 wt.%, particularly preferably 30 to 60 wt.% of at least one vinyl monomer on
B.2 95 to 5, preferably 80 to 10 wt.%, particularly preferably 70 to 40 wt.% of one or more graft bases.

The glass transition temperature of the graft base is preferably < 10 ºC, further preferably < 0 ºC, and particularly preferably < -20 ºC.

The graft base B.2 in general has an average particle size (d50 value) of from 0.05 to 10.00 µm, preferably 0.10 to 5.00 µm, further preferably 0.20 to 1.00 µm, and particularly preferably from 0.25 to 0.50 µm.

Monomers B.1 are preferably mixtures of
B.1.1 50 to 99 parts by wt. of vinylaromatics and/or vinylaromatics substituted on the nucleus (such as styrene, α-methylstyrene, p-methylstyrene, p-chlorostyrene) and/or (meth)acrylic acid (C1-C8)-alkyl esters (such as methyl methacrylate, ethyl methacrylate) and
B.1.2 1 to 50 parts by wt. of vinyl cyanides (unsaturated nitriles, such as acrylonitrile and methacrylonitrile) and/or (meth)acrylic acid (C1-C8)-alkyl esters, such as methyl methacrylate, n-butyl acrylate, t-butyl acrylate, and/or derivatives (such as anhydrides and imides) of unsaturated carboxylic acids, for example maleic anhydride.

Preferred monomers B.1.1 are chosen from at least one of the monomers styrene, α-methylstyrene and methyl methacrylate, and preferred monomers B.1.2 are chosen from at least one of the monomers acrylonitrile, maleic anhydride and methyl methacrylate. Particularly preferred monomers are B.1.1 styrene and B.1.2 acrylonitrile.

Graft bases B.2 which are suitable for the graft polymers B are, for example, diene rubbers, EP(D)M rubbers, that is to say those based on ethylene/propylene and optionally diene, and acrylate, polyurethane, silicone, chloroprene and ethylene/vinyl acetate rubbers.

Preferred graft bases B.2 are diene rubbers, for example based on butadiene and isoprene, or mixtures of diene rubbers or copolymers of diene rubbers or mixtures thereof with further copolymerizable monomers (e.g. according to B.1.1 and B.1.2). Pure polybutadiene rubber is particularly preferred.

The glass transition temperature is determined by means of dynamic differential scanning calorimetry (DSC) in accordance with DIN EN 61006 at a heating rate of 10 K/min with determination of the Tg as a midpoint determination (tangent method).

Particularly preferred polymers B are, for example, ABS polymers (emulsion, bulk and suspension ABS) such as are described e.g. in DE-OS 2 035 390 (= US 3 644 574) or in DE-OS 2 248 242 (= GB 1 409 275) and in Ullmanns, Enzyklopädie der Technischen Chemie, vol. 19 (1980), p. 280 et seq. The gel content of the graft base B.2 is at least 30 wt.%, preferably at least 40 wt.% (measured in toluene).

The graft copolymers B are prepared by free radical polymerization, e.g. by emulsion, suspension, solution or bulk polymerization, preferably by emulsion or bulk polymerization.

Particularly suitable graft rubbers are also ABS polymers which are prepared in the emulsion polymerization process by redox initiation with an initiator system of organic hydroperoxide and ascorbic acid in accordance with US 4 937 285.

Since as is known the grafting monomers are not necessarily grafted completely on to the graft base during the grafting reaction, according to the invention graft polymers B are also understood as meaning those products which are produced by (co)polymerization of the grafting monomers in the presence of the graft base and are also obtained during the working up.

Suitable acrylate rubbers according to B.2 of the polymers B are preferably polymers of acrylic acid alkyl esters, optionally with up to 40 wt.%, based on B.2, of other polymerizable, ethylenically unsaturated monomers. The preferred polymerizable acrylic acid esters include C1 to C8-alkyl esters, for example methyl, ethyl, butyl, n-octyl and 2-ethylhexyl esters; haloalkyl esters, preferably halo-C1-C8-alkyl esters, such as chloroethyl acrylate, and mixtures of these monomers.

For crosslinking, monomers having more than one polymerizable double bond can be copolymerized. Preferred examples of crosslinking monomers are esters of unsaturated monocarboxylic acids having 3 to 8 C atoms and unsaturated monofunctional alcohols having 3 to 12 C atoms, or of saturated polyols having 2 to 4 OH groups and 2 to 20 C atoms, such as ethylene glycol dimethacrylate, allyl methacrylate; polyunsaturated heterocyclic compounds, such as trivinyl and triallyl cyanurate; polyfunctional vinyl compounds, such as di- and trivinylbenzenes; but also triallyl phosphate and diallyl phthalate. Preferred crosslinking monomers are allyl methacrylate, ethylene glycol dimethacrylate, diallyl phthalate and heterocyclic compounds which have at least three ethylenically unsaturated groups. Particularly preferred crosslinking monomers are the cyclic monomers triallyl cyanurate, triallyl isocyanurate, triacryloylhexahydro-s-triazine, triallylbenzenes. The amount of the crosslinking monomers is preferably 0.02 to 5.00, in particular 0.05 to 2.00 wt.%, based on the graft base B.2. In the case of cyclic crosslinking monomers having at least three ethylenically unsaturated groups, it is advantageous to limit the amount to less than 1 wt.% of the graft base B.2.

Preferred "other" polymerizable, ethylenically unsaturated monomers which can optionally serve for preparation of the graft base B.2 in addition to the acrylic acid esters are e.g. acrylonitrile, styrene, α-methylstyrene,acrylamides, vinyl C1-C6-alkyl ethers, methyl methacrylate and butadiene. Preferred acrylate rubbers as the graft base B.2 are emulsion polymers which have a gel content of at least 60 wt.%.

Further suitable graft bases according to B.2 are silicone rubbers having grafting-active sites, such as are described in DE-OS 3 704 657, DE-OS 3 704 655, DE-OS 3 631 540 and DE-OS 3 631 539.

The gel content of the graft base B.2 is determined at 25 ºC in a suitable solvent (M. Hoffmann, H. Krömer, R. Kuhn, Polymeranalytik I und II, Georg Thieme-Verlag, Stuttgart 1977).

The average particle size d50 is the diameter above and below which in each case 50 wt.% of the particles lie. It can be determined by means of ultracentrifuge measurement (W. Scholtan, H. Lange, Kolloid, Z. und Z. Polymere 250 (1972), 782-1796).

### C. Polyalkylene terephthalates.

The polyalkylene terephthalates are reaction products of aromatic dicarboxylic acids or their reactive derivatives, such as dimethyl esters or anhydrides, and aliphatic, cycloaliphatic or araliphatic diols, and mixtures of these reaction products.

Preferred polyalkylene terephthalates comprise at least 80 wt.%, preferably at least 90 wt.%, based on the dicarboxylic acid component, of terephthalic acid radicals and at least 80 wt.%, preferably at least 90 wt.%, based on the diol component, of radicals of ethylene glycol and/or butane-1,4-diol.

The preferred polyalkylene terephthalates can comprise, in addition to terephthalic acid radicals, up to 20 mol%, preferably up to 10 mol%, of radicals of other aromatic or cycloaliphatic dicarboxylic acids having 8 to 14 C atoms or aliphatic dicarboxylic acids having 4 to 12 C atoms, such as e.g. radicals of phthalic acid, isophthalic acid, naphthalene-2,6-dicarboxylic acid, 4,4'-diphenyldicarboxylic acid, succinic acid, adipic acid, sebacic acid, azelaic acid, cyclohexanediacetic acid.

The preferred polyalkylene terephthalates can comprise, in addition to radicals of ethylene glycol or butane-1,4-diol, up to 20 mol%, preferably up to 10 mol%, of other aliphatic diols having 3 to 12 C atoms or cycloaliphatic diols having 6 to 21 C atoms, e.g. radicals of propane-1,3-diol, 2-ethylpropane-1,3-diol, neopentyl glycol, pentane-1,5-diol, hexane-1,6-diol, cyclohexane-1,4-dimethanol, 3-ethylpentane-2,4-diol, 2-methylpentane-2,4-diol, 2,2,4-trimethylpentane-1,3-diol, 2-ethylhexane-1,3-diol, 2,2-diethylpropane-1,3-diol, hexane-2,5-diol, 1,4-di-(β-hydroxyethoxy)-benzene, 2,2-bis-(4-hydroxycyclohexyl)-propane, 2,4-dihydroxy-1,1,3,3-tetramethylcyclobutane, 2,2-bis-(4-β-hydroxyethoxyphenyl)-propane and 2,2-bis-(4-hydroxypropoxyphenyl)-propane (DE-A 2 407 674, 2 407 776, 2 715 932).

The polyalkylene terephthalates can be branched by incorporation of relatively small amounts of 3- or 4-functional alcohols or 3- or 4-basic carboxylic acids, e.g. in accordance with DE-A 1 900 270 and US 3 692 744. Examples of preferred branching agents are trimesic acid, trimellitic acid, trimethylolethane and - propane and pentaerythritol.

Polyalkylene terephthalates which have been prepared solely from terephthalic acid and reactive derivatives thereof (e.g. dialkyl esters thereof) and ethylene glycol and/or butane-1,4-diol, and/or mixtures of these polyalkylene terephthalates are particularly preferred.

Mixtures of polyalkylene terephthalates comprise 1 to 50 wt.%, preferably 1 to 30 wt.% of polyethylene terephthalate and 50 to 99 wt.%, preferably 70 to 99 wt.% of polybutylene terephthalate.

The polyalkylene terephthalates preferably used in general have a limiting viscosity of from 0.4 to 1.5 dl/g, preferably 0.5 to 1.2 dl/g, measured in phenol/o-dichlorobenzene (1:1 parts by weight) at 25 ºC in an Ubbelohde viscometer.

The polyalkylene terephthalates can be prepared by known methods (see e.g. Kunststoff-Handbuch, volume VIII, p. 695 et seq., Carl-Hanser-Verlag, Munich 1973).

### D. Inorganic fillers

These inorganic fillers are special inorganic particles having a grain shape chosen from the group which includes spherical / cubic, tabular / discus-shaped and lamellar geometries. A stalk-like grain shape is not suitable in the context of the present invention.

Inorganic fillers having a spherical or lamellar geometry, preferably in finely divided and/or porous form having a large external and/or internal surface area are suitable in particular. These are preferably thermally inert inorganic materials, in particular based on nitrides, such as boron nitride, or are oxides or mixed oxides, such as cerium oxide, aluminum oxide, or are carbides, such as tungsten carbide, silicon carbide or boron carbide, powdered quartz, such as quartz flour, amorphous SiO2, ground sand, glass particles, such as glass powder, in particular glass spheres, silicates or alumosilicates, graphite, in particular highly pure synthetic graphite. In this context, quartz and talc are preferred in particular, and quartz (spherical grain shape) is most preferred.

The fillers used in the invention are characterized by an average diameter d50% of from 0.1 to 10 µm, preferably from 0.2 to 8.0 µm, further preferably from 0.5 to 5 µm.

In a preferred embodiment, component D is finely divided quartz flours which have been prepared from processed quartz sand by iron-free grinding with subsequent air separation.

The silicates used in the invention are characterized by an average diameter d50% of from 2 to 10 µm, preferably from 2.5 to 8.0 µm, further preferably from 3 to 5 µm, and particularly preferably of 3 µm, an upper diameter d95% of from correspondingly 6 to 34 µm, further preferably from 6.5 to 25.0 µm, still further preferably from 7 to 15 µm, and particularly preferably of 10 µm being preferred.

Preferably, the silicates have a specific BET surface area, determined by nitrogen adsorption in accordance with ISO 9277, of from 0.4 to 8.0 m2/g, further preferably from 2 to 6 m2/g, and particularly preferably from 4.4 to 5.0 m2/g.

Silicates which are further preferred have only a maximum of 3 wt.% of secondary constituents, wherein preferably the content of
Al2O3 is < 2.0 wt.%,
Fe2O3 is < 0.05 wt.%,
(CaO + MgO) is < 0.1 wt.%.
(Na2O + K2O) is < 0.1 wt.%, in each case based on the total weight of the silicate.

Preferably, silicates having a pH, measured in accordance with ISO 10390 in aqueous suspension, in the range of 6 to 9, further preferably 6.5 to 8.0 are employed.

They moreover have an oil absorption number according to ISO 787-5 of from preferably 20 to 30 g/100 g.

A further advantageous embodiment uses talc in the form of finely ground types having an average particle diameter d50 of < 10 µm, preferably < 5 µm, particularly preferably < 2 µm, very particularly preferably < 1.5 µm.

The grain size distribution is determined by air separation.

Inorganic fillers, in particular silicates, which have a coating with organosilicon compounds are particularly preferably employed, epoxysilane, methylsiloxane and methacrylsilane sizes preferably being employed. An epoxysilane size is particularly preferred.

The sizing of inorganic fillers is carried out by the general processes known to the person skilled in the art.

### E. Further Additives

The compositions can comprise further additives as component E. Possible further additives according to component E are, in particular, conventional polymer additives, such as flameproofing agents (e.g. organic phosphorus or halogen compounds, in particular oligophosphate based on bisphenol A), antidripping agents (for example compounds of the substance classes of fluorinated polyolefins, e.g. polytetrafluoroethylene, the silicones and aramid fibres), lubricants and mold release agents, preferably pentaerythritol tetrastearate, nucleating agents, stabilizers (for example UV, heat and/or hydrolysis stabilizers and antioxidants), as well as dyestuffs and pigments (for example carbon black, titanium dioxide or iron oxide).

Stabilizers which are employed are, in particular, phosphorus-based and/or phenolic stabilizers, preferably tris(2,4-di-tert-butylphenyl) phosphite or 2,6-di-tert-butyl-4-(octadecanoxy-carbonylethyl)phenol and mixtures thereof.

### F. Semicrystalline Thermoplastics

Semicrystalline thermoplastics and methods of their production are known to those skilled in the art. Preferred semicrystalline thermoplastics for use in the inventive composition include, but are not limited to, polyethylene (PE), polypropylene (PP), polybutylene terephthalate (PBT) and polyethylene terephthalate (PET), polyphenylene sulfide (PPS), polyphenylene ether (PPO), liquid crystalline polymers (LCPs), and polyamide.

Amorphous and semicrystalline thermoplastics can be blended as resin composition in the present invention. Examples of blends of amorphous and semicrystalline thermoplastics are well known to those skilled in the art. Some examples of such blends are polycarbonate and PET, polycarbonate and PBT, polycarbonate and PPS, polycarbonate and LCPs. Some of these blends are commercially available from Covestro LLC under the trade name MAKROBLEND. There is no limitation on what kind of amorphous thermoplastic to blend with what kind of semicrystalline thermoplastic as long as the resulted blend serves the intended application.

### G. Thermally Conductive Additive

In some compositions, a thermally conductive additive may be included. Such an additive may be graphene, graphite, aluminum or other metal particles, carbon fiber, or other conductor, or thermally conductive polymers. In a preferred embodiment, expanded graphite is the thermally conductive additive.

Expanded graphite and methods of its production are known to those skilled in the art. Expanded graphite useful is present in an amount ranging from 10% to 70% of the composition of the present invention, more preferably from 20% to 60% and most preferably from 30% to 50%. The expanded graphite may be present in the composition of the present invention in an amount ranging between any combination of these values, inclusive of the recited values. The present inventors have found that at least 90% of the particles of the expanded graphite should have a particle size of at least 200 microns.

### H. Flow Enhancers

The diglycerol esters employed as flow enhancers are esters of carboxylic acids and diglycerol. Esters based on various carboxylic acids are suitable. The esters may also be based on different isomers of diglycerol. It is possible to use not only monoesters but also polyesters of diglycerol. It is also possible to use mixtures instead of pure compounds.

Where the composition includes flow enhancers, the composition may preferably be free of demolding agents such as glycerol monostearate (GMS) since the diglycerol ester itself acts as a demolding agent.

### I. Heat and/or Transesterification Stabilizers

The compositions may optionally comprise one or more heat and/or transesterification stabilizers.

Preferentially suitable heat stabilizers are triphenylphosphine, tris(2,4-di-tert-butylphenyl) phosphite (Irgafos^{®} 168), tetrakis(2,4-di-tert-butylphenyl)-[1,1-biphenyl]-4,4'-diyl bisphosphonite, octadecyl-3-(3,5-di-tert-butyl-4-hydroxyphenyl) propionate (Irganox^{®} 1076), bis(2,4-dicumylphenyl)pentaerythritol diphosphite (Doverphos^{®} S-9228-PC), bis(2,6-di-tert-butyl-4-methylphenyl)pentaerythritol diphosphite (ADK STAB PEP-36). Said heat stabilizers are employed alone or in admixture (for example Irganox^{®} B900 (mixture of Irgafos^{®} 168 and Irganox^{®} 1076 in a 1:3 ratio) or Doverphos^{®} S-9228-PC with Irganox^{®} B900/Irganox^{®} 1076).

Preferably present transesterification stabilizers are phosphates or sulfonic esters. A preferably present stabilizer is triisooctyl phosphate.

### J. Phosphorus Compound

The composition may optionally comprise a phosphorus compound selected from the group of the monomeric and oligomeric phosphoric and phosphonic esters; mixtures of two or more components selected from one or various of these groups may also be employed.

Monomeric and oligomeric phosphoric and/or phosphonic esters used in accordance with the invention are phosphorus compounds of the general formula (V) 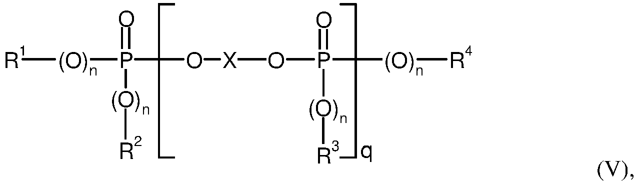 in which
R¹, R², R³ and R⁴ independently of one another are C₁- to C₈-alkyl, in each case optionally halogenated and in each case branched or unbranched, and/or C₅- to C₆-cycloalkyl, C₆- to C₂₀-aryl or C₇- to C₁₂-aralkyl, in each case optionally substituted by a branched or unbranched alkyl, and/or halogen, preferably chlorine and/or bromine,
n independently at each occurrence is 0 or 1,
q is an integer from 0 to 30, and
X is a monocyclic or polycyclic aromatic radical having 6 to 30 C atoms or is a linear or branched aliphatic radical having 2 to 30 C atoms, it being possible for the radical in each case to be substituted or unsubstituted, bridged or unbridged.

Preferably R¹, R², R³ and R⁴ independently of one another are branched or unbranched C₁- to C₄-alkyl, phenyl, naphthyl or C₁- to C₄-alkyl-substituted phenyl. In the case of aromatic groups R¹, R², R³ and/or R⁴, they may in turn be substituted by halogen groups and/or alkyl groups, preferably chlorine, bromine and/or C₁- to C₄-alkyl, branched or unbranched. Particularly preferred aryl radicals are cresyl, phenyl, xylenyl, propylphenyl or butylphenyl, and also the corresponding brominated and chlorinated derivatives thereof.

X in the formula (V) derives preferably from diphenols.
n in the formula (V) is preferably 1.
q is preferably 0 to 20, more preferably 0 to 10, and in the case of mixtures comprises average values from 0.8 to 5.0, preferably 1.0 to 3.0, more preferably 1.05 to 2.00 and very preferably from 1.08 to 1.60.

A preferred phosphorus compound of the general formula V is a compound of the formula I: 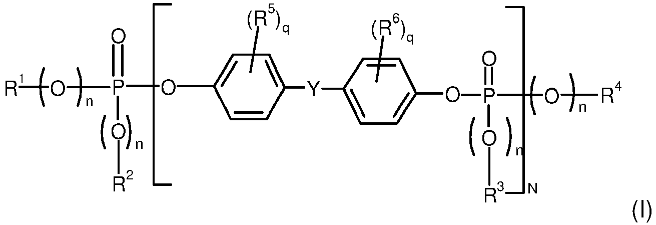 in which
R¹, R², R³ and R⁴ in each case independently of one another are linear or branched C₁- to Cs-alkyl and/or C₅- to C₆-cycloalkyl, C₆- to C₁₀-aryl or C₇-to C₁₂-aralkyl each optionally substituted by linear or branched alkyl, n independently at each occurrence is 0 or 1,
q independently at each occurrence is 0, 1, 2, 3 or 4,
N is a number between 1 and 30,
R₅ and R₆ independently of one another are linear or branched C₁- to C₄-alkyl, preferably methyl, and
Y is linear or branched C₁- to C₇-alkylidene, linear or branched C₁- to C₇-alkylene, C₅- to C₁₂-cycloalkylene, C₅- to C₁₂-cycloalkylidene, -O-, -S-, - SO-, SO₂ or -CO-.

X in formula V is more preferably: 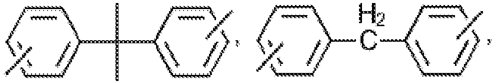 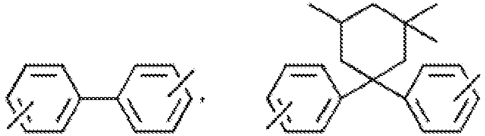 or their chlorinated and/or brominated derivatives. Preferably X (with the adjacent oxygen atoms) derives from hydroquinone, bisphenol A or diphenylphenol. Likewise preferably X derives from resorcinol. With particular preference X derives from bisphenol A.

Phosphorus compounds of the formula (V) are, in particular, tributyl phosphate, triphenyl phosphate, tricresyl phosphate, diphenyl cresyl phosphate, diphenyl octyl phosphate, diphenyl 2-ethylcresyl phosphate, tri(isopropylphenyl) phosphate, resorcinol-bridged oligophosphate and bisphenol A-bridged oligophosphate. The use of oligomeric phosphoric esters of the formula (V) which derive from bisphenol A is especially preferred.

Extremely preferred as the phosphorus compound is bisphenol A-based oligophosphate of formula (Va).

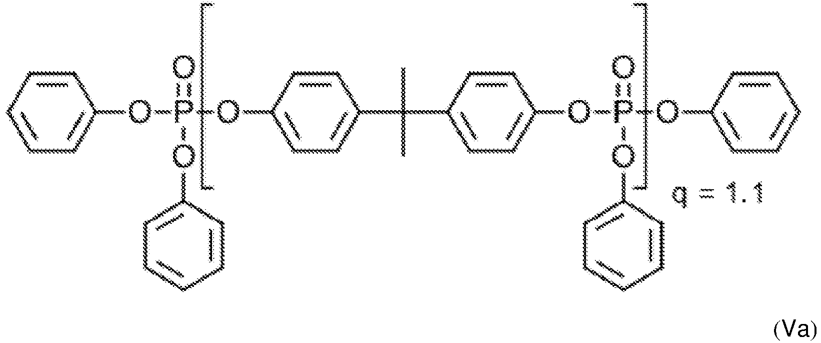

Particularly preferred, moreover, are oligophosphates analogous to the formula (Va), in which q is between 1.0 and 1.2, preferably 1.1.

The phosphorus compounds of component C are known (cf. e.g. EP 0 363 608 A1, EP 0 640 655 A2) or can be prepared by known methods in an analogous way (e.g. Ullmanns Enzyklopädie der technischen Chemie, Vol. 18, p. 301 ff., 1979; Houben-Weyl, Methoden der organischen Chemie, Vol. 12/1, p. 43; Beilstein Vol. 6, p. 177).

Preference is given to using mixtures with the same structure and different chain lengths, with the reported value of q being the average value of q. The average value of q is determined by ascertaining the composition of the phosphorus compound mixture (molecular weight distribution) by means of high-pressure liquid chromatography (HPLC) at 40°C in a mixture of acetonitrile and water (50:50) and using this to calculate the average values for q.

### K. Ethylene/ alkyl (meth)acrylate Copolymer

Option Component K may be an ethylene/alkyl (meth)acrylate copolymer of the formula (VI), 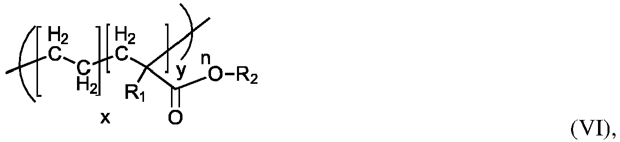 where
R₁ is methyl or hydrogen,
R₂ is hydrogen or a C₁- to C₁₂-alkyl radical, preferably methyl, ethyl, propyl, isopropyl, butyl, sec-butyl, tert-butyl, isobutyl, hexyl, isoamyl or tert-amyl,
x and y are each an independent degree of polymerization (integer), and n is an integer ≥ 1.

The ratios of the degrees of polymerization x and y are preferably in the range of x:y = 1:300 to 90:10.

The ethylene/alkyl (meth)acrylate copolymer may be a random, block or multiblock copolymer or may comprise mixtures of these structures. Used in one preferred embodiment are branched and unbranched ethylene/alkyl (meth)acrylate copolymers, more preferably linear ethylene/alkyl (meth)acrylate copolymers.

The melt flow index (MFR) of the ethylene/alkyl (meth)acrylate copolymer (measured at 190°C under a load of 2.16 kg, ASTM D1 238) is preferably in the range of 2.5 - 40.0 g/(10 min), more preferably in the range of 3.0 - 10.0 g/(10 min), very preferably in the range of 3.0 - 8.0 g/(10 min).

Used with preference in compositions of the invention is Elvaloy^{®} 1820 AC (DuPont). This is an ethylene/methyl acrylate copolymer having a methyl acrylate content of 20% and a melt flow index of 8 g/(10 min), determined at 190°C and 2.16 kg according to ASTM D1238.

### 2. Compositions

The following are examples of compositions that may be used in association with the present invention. However, the inventive process described herein may be used in association with other compositions as well.

While compositions below are described as first shot or second shot compositions, they may be interchangeable. However, if one composition is more thermally conductive than the other, then the more thermally conductive composition is preferably the second shot to be injected into the mold, to minimize the time that it may cool, because it will likely cool faster than the less thermally conductive composition. Thermal conductivity is measured using ISO 22007-2. In that method, a sensor (which acts as both the heat source and temperature sensor) is sandwiched between two flat samples of the material of interest. A known amount of power is supplied to the sensor for a pre-determined amount of time. The change in resistance as a function of time due to the increase in temperature is recorded. By monitoring the temperature increase over a short period of time, the thermal transport properties, (thermal conductivity) of the material can be obtained. In-plane thermal conductivity is measured, rather than through-plane. In a preferred embodiment, the thermal conductivity of the first shot composition is 0.1 - 0.3 W/ m-K. In another preferred embodiment, the thermal conductivity of the second shot composition is 1 - 40 W/ m-K.

In yet another embodiment, the melt temperature of the second shot polymer is between 200 °C and 400 °C, preferably 250 °C and 34 0 °C. The melt temperature is measured using a pyrometer positioned centrally within the melt stream as it exits the machine nozzle of an injection molding machine.

In another preferred embodiment, the two thermoplastic compositions are compatible, such that they demonstrate good adhesion when molded together. Compositions whose primary ingredient is Polycarbonate (PC), or PC/ acrylonitrile butadiene styrene (ABS) blends, have been found to have high compatibility with other PC and PC/ ABS blend compositions, as well as with ABS, polybutylene terephthalate (PBT) and thermoplastic polyurethane (TPU). PC and PC/ ABS has also been found to have some compatibility with polymethylmethacrylate (PMMA) and polyethylene terephthalate (PET).

### A. First shot compositions

A) 30 - 100 parts by wt., preferably 40 - 90 parts by wt., particularly preferably 50 - 85 parts by wt. of aromatic polycarbonate and/or aromatic polyester carbonate, preferably polycarbonate,
B) 0 - 50 parts by wt., preferably 0 - 40.0 parts by wt., particularly preferably 5.0 - 20.0 parts by wt. of rubber-modified graft polymer and/or vinyl copolymer,
C) 0 - 50.0 parts by wt., preferably 0 - 30.0 parts by wt., particularly preferably 10.0 - 25.0 parts by wt. of polyester, preferably PBT or PET,
D) 5.0 - 50.0 parts by wt., preferably 10.0 - 30.0 parts by wt., particularly preferably 15.0 to 25.0 parts by wt. of inorganic filler with a grain shape chosen from the group which includes spherical / cubic, tabular / discus-shaped and lamellar geometries.
E) 0 - 5.0 parts by wt., preferably 0.5 - 3.0 parts by wt., particularly preferably 0.75 - 1.25 parts by wt. of further conventional polymer additives,
   wherein all the parts by weight stated above are standardized such that the sum of the parts by weight of all components A+B+C+D+E in the composition is 100.

### B. Second shot compositions

F) At least one semicrystalline thermoplastic is present in an amount ranging from 90% to 30% of the composition of the second shot, more preferably from 80% to 40% and most preferably from 70% to 50%. In another embodiment, Component F is aromatic polycarbonate, present in an amount ranging from 20 to 94.8 wt%, preferably 60 to 89.8 wt%, particularly preferably 65 to 85 wt%.

G) The thermally conductive additive is preferably expanded graphite, which is present in an amount ranging from 10% to 70% of the composition of the present invention, more preferably from 20% to 60% and most preferably from 30% to 50%. In a preferred embodiment, at least 90% of the particles of the expanded graphite should have a particle size of at least 200 microns. In another embodiment, Component G is graphite, most preferably expanded graphite, present in an amount ranging from 5 to 40 wt%, preferably 10 to 35 wt%, particularly preferably 15 to 35 wt%, very particularly preferably 20 to 25 wt%.

H) A flow enhancer may optionally be added to the composition. In one embodiment, diglycerol ester is added in amounts of 0.2 wt% to 3.0 wt%, preferably 0.2 to 2.5 wt%, particularly preferably 0.2 to 2.0 wt%, very particularly preferably 0.2 to 1.8 wt%.

I) The second shot composition may optionally include up to 1.0 wt% of heat stabilizer and/or transesterification stabilizer and/or optionally up to 10.0 wt% of one or more further additives from the group consisting of demolding agents, flame retardants, anti-dripping agents, antioxidants, inorganic pigments, carbon black, dyes and/or inorganic fillers such as titanium dioxide, silicates, talc and/or barium sulfate.

J) A phosphorus compound may optionally be included, in an amount of 0.5 to 10 wt%, preferably 6.0 to 10.0 wt%, more preferably 6.0 to 9.0 wt%, most preferably 5.0 to 7.0 wt% of the composition.

K) An ethylene/alkyl (meth)acrylate copolymer may optionally be included, in an amount of 0.01 to 5 wt%, preferably 2 to 4.5 wt%, very preferably 3 to 4 wt% of the composition.

### 3. Compounding

The preparation of polymer compositions that may be used according to the invention is carried out with the usual processes of incorporation by bringing together, mixing and homogenizing the individual constituents, the homogenizing in particular preferably taking place in the melt under the action of shearing forces. The bringing together and mixing are optionally carried out before the melt homogenization, using powder premixes.

Premixes of granules or granules and powders with the additives according to the invention can also be used.

Premixes which have been prepared from solutions of the mixing components in suitable solvents, homogenization optionally being carried out in solution and the solvent then being removed, can also be used.

In particular, the additives of the composition according to the invention can be introduced here by known processes or as a masterbatch.

The use of masterbatches is preferred in particular for introduction of the additives, masterbatches based on the particular polymer matrix being used in particular.

In this connection, the composition can be brought together, mixed, homogenized and then extruded in conventional devices, such as screw extruders (for example twin-screw extruders, TSE), kneaders or Brabender or Banbury mills. After the extrusion, the extrudate can be cooled and comminuted. Individual components can also be premixed and the remaining starting substances can then be added individually and/or likewise as a mixture.

The bringing together and thorough mixing of a premix in the melt can also be carried out in the plasticizing unit of an injection molding machine. In this procedure, the melt is converted directly into a shaped article in the subsequent step.

### 4. Injection Molding Process

A two shot injection molding process includes injecting a first composition, pressurizing the cavity, and then injecting a second composition. In addition, the injection temperatures of the compositions are controlled, as are the mold walls. The process of dynamic mold temperature control in injection molding is characterized in that the mold wall is heated up swiftly before injection of the melt. Due to the elevated mold temperature, premature solidification of the melt is prevented, so that inter alia a higher casting accuracy of the mold surface is possible and the quality of the component surface improves. The temperature of the mold wall should be in the region of the Vicat temperature of the composition that is being molded +/- 40 ºC, preferably in the region +/- 20 ºC. The Vicat temperature is measured by ASTM D-1525. Dynamic mold temperature control is furthermore characterized in that the temperature of the mold wall after the injection operation may be controlled, to prevent cooling before and during the second shot injection, and then to allow cooling to the original temperature, and the finished component is cooled down to the mold release temperature in the mold in the conventional manner. For the examples mentioned in the following, dynamic mold temperature control with the aid of induction heating was used.

In a preferred embodiment, the mold temperature is 70°C to 100°C. The surface temperature of the first shot material should be in the range of 80°C to 100°C, just before overmolding of the second shot material. A high injection temperature of the second shot material is recommended, from 250°C to 340°C. Preferably, there is no cooling step following injection of the first shot material, before injection of the second shot material.

In another embodiment, the cavity is rapidly pressurized during the second injection. It has been found that such pressurization reduces the amount the first shot material may cool before the second shot injection. However, excessive cavity pressure may lead to internal stress and a potential decrease in adhesion between the mating surfaces of the first composition and the second composition. In this embodiment, the cavity pressure is 10 to 200 MPa, preferably 20 to 150 MPa.

The injection speed is preferably high to ensure a short dwell time of the material being injected. In another preferred embodiment, injection speeds of 25 mm/ sec to 200 mm/ sec are preferred to minimize the cooling of the material, as well as to prevent any buildup of pressure in the cavity.

Using this injection molding process, the second shot material molds onto an uneven or irregular surface of the first shot material, which is still hot in the mold. The uneven surface allows for more surface area for both adhesion and heat transfer. Furthermore, as the mold cools, the materials experience cooling and shrinking at the same time, reducing the possibility that one of the compositions will break away from the other during the cooling process.

### 5. Metallization or Coated with Metal-like Coating

Optionally, a portion of the molded part may be metalized. The application of metals to a polymer can be effected via various methods, such as e.g. by vapor deposition or sputtering. The processes are described in more detail e.g. in "Vakuumbeschichtung vol. 1 to 5", H. Frey, VDI-Verlag Düsseldorf 1995 or "Oberflächen- und Dünnschicht-Technologie" part 1, R.A. Haefer, Springer Verlag 1987.

In order to achieve a better adhesion of the metal and in order to clean the substrate surface, the substrates are usually subjected to a plasma pretreatment. Under certain circumstances, a plasma pretreatment can modify the surface properties of polymers. These methods are described e.g. by Friedrich et al. in Metallized plastics 5 & 6: Fundamental and applied aspects and H. Grünwald et al. in Surface and Coatings Technology 111 (1999) 287-296.

Further layers, such as corrosion-reducing protective sizes, can be applied in a PECVD (plasma enhanced chemical vapor deposition) or plasma polymerization process. In these, low-boiling precursors chiefly based on siloxane are vaporized in a plasma and thereby activated, so that they can form a film. Typical substances here are hexamethyldisiloxane (HMDSO), tetramethyldisiloxane, decamethylcyclopentasiloxane, octamethylcyclotetrasiloxane and trimethoxymethylsilane.

Possible metals are, preferably, Ag, Al, Ti, Cr, Cu, VA steel, Au, Pt, particularly preferably Ag, Al, Ti or Cr.

The following preferred embodiments of the present invention are summarized:
1. A process to manufacture a molded thermoplastic part by injection molding, the process comprising:
   heating the mold cavity surface to a temperature greater than 70 °C;
   injecting a first polymer into a mold at a cavity surface temperature Ti1, the first polymer having a melt temperature Tm1 and a thermal conductivity Tc1;
   injecting a second polymer into the mold at a cavity surface temperature Ti2, the second polymer having a melt temperature Tm2 and a thermal conductivity Tc2; and
   cooling the mold to a temperature less than Tm1, and
   wherein Tc2 is greater than Tc1.
2. The process of embodiment 1, wherein the first polymer has a Vicat temperature Tv1, and Ti1 is between Tv1 - 40 °C and Tv1 + 40 °C, preferably between Tv1 - 20 °C and Tv1 + 20 °C.
3. The process of any of the preceding embodiments, wherein the second polymer has a Vicat temperature Tv2, and Ti2 is between Tv2 - 40 °C and Tv2 + 40 °C, preferably between Tv2 - 20 °C and Tv2 + 20 °C.
4. The process of any of the preceding embodiments, wherein Ti1 is between 70 °C and 100 °C, preferably 80 °C and 100 °C.
5. The process of any of the preceding embodiments, wherein the cavity pressure is between 10 and 200 MPa, preferably between 20 and 150 MPa.
6. The process of any of the preceding embodiments, wherein the first polymer is injected at a speed ranging from 25 mm/ sec to 200 mm/ sec.
7. The process of any of the preceding embodiments, wherein Tm2 is between 200 °C and 400 °C, preferably 250 °C and 34 0 °C.
8. The process of any of the preceding embodiments, wherein the thermal conductivity of the first polymer is 0.1 to 0.3 W/ m-K.
9. The process of any of the preceding embodiments, wherein the thermal conductivity of the second polymer is 1 to 40 W/ m-K.
10. The process of any of the preceding embodiments, wherein the first polymer is a composition that comprises a compound selected from the group consisting of: polycarbonate and acrylonitrile butadiene styrene, in an amount greater than any other compound in the composition.
11. The process of any of the preceding embodiments, wherein the second polymer is a composition that comprises a compound selected from the group consisting of: polycarbonate, acrylonitrile butadiene styrene, polybutylene terephthalate, thermoplastic polyurethane, polymethyl methacrylate and polyethylene terephthalate, in an amount greater than any other compound in the composition.
12. The process of any of the preceding embodiments, wherein the first polymer is a composition that comprises a compound selected from the group consisting of: polycarbonate, acrylonitrile butadiene styrene, polybutylene terephthalate, thermoplastic polyurethane, polymethyl methacrylate and polyethylene terephthalate, in an amount greater than any other compound in the composition.
13. The process of any of the preceding embodiments, wherein the second polymer is a composition that comprises a compound selected from the group consisting of: polycarbonate and acrylonitrile butadiene styrene, in an amount greater than any other compound in the composition.
14. The process of any of the preceding embodiments, wherein there is no cooling step between injecting the first polymer and injecting the second polymer.
15. The process of any of the preceding embodiments, wherein the first polymer comprises:
   A) 30 - 100 parts by wt., preferably 40 - 90 parts by wt., particularly preferably 50 - 85 parts by wt. of aromatic polycarbonate and/or aromatic polyester carbonate, preferably polycarbonate,
   B) 0 - 50 parts by wt., preferably 0 - 40.0 parts by wt., particularly preferably 5.0 - 20.0 parts by wt. of rubber-modified graft polymer and/or vinyl copolymer,
   C) 0 - 50.0 parts by wt., preferably 0 - 30.0 parts by wt., particularly preferably 10.0 - 25.0 parts by wt. of polyester, preferably polybutylene terephthalate or polyethylene terephthalate,
   D) 5.0 - 50.0 parts by wt., preferably 10.0 - 30.0 parts by wt., particularly preferably 15.0 to 25.0 parts by wt. of inorganic filler with a grain shape chosen from the group which includes spherical / cubic, tabular / discus-shaped and lamellar geometries,
   E) 0 - 5.0 parts by wt., preferably 0.5 - 3.0 parts by wt., particularly preferably 0.75 - 1.25 parts by wt. of further conventional polymer additives,
   wherein all the parts by weight stated above are standardized such that the sum of the parts by weight of all components A+B+C+D+E in the composition is 100.
16. The process of any of the preceding embodiments, wherein the second polymer is a composition comprising:
   F) at least one semicrystalline thermoplastic is present in an amount ranging from 90 wt.% to 30 wt.% of the composition of the second polymer, more preferably from 80 wt.% to 40 wt.% and most preferably from 70 wt.% to 50 wt.%,
   G) a thermally conductive additive present in an amount ranging from 10 wt.% to 70 wt.% of the composition, more preferably from 20 wt.% to 60 wt.% and most preferably from 30 wt.% to 50 wt.%,
   H) optionally, a flow enhancer in an amount ranging from 0.2 wt.% to 3.0 wt.%, preferably 0.2 to 2.5 wt.%, particularly preferably 0.2 to 2.0 wt.%, very particularly preferably 0.2 to 1.8 wt.%,
   I) optionally, 0 to 1.0 wt.% of a heat stabilizer and/or transesterification stabilizer,
   J) optionally, a phosphorus compound, in an amount of 0.5 to 10 wt.%, preferably 6.0 to 10.0 wt.%, more preferably 6.0 to 9.0 wt.%, most preferably 5.0 to 7.0 wt.%, and
   K) optionally, an ethylene/alkyl (meth)acrylate copolymer in an amount of 0.01 to 5 wt.%, preferably 2 to 4.5 wt.%, very preferably 3 to 4 wt.%.
17. The process of any of the preceding embodiments, wherein Component F is aromatic polycarbonate, present in an amount ranging from 20 to 94.8 wt%, preferably 60 to 89.8 wt%, particularly preferably 65 to 85 wt%.
18. The process of any of the preceding embodiments, wherein Component G is graphite, preferably expanded graphite, present in an amount ranging from 5 to 40 wt%, preferably 10 to 35 wt%, particularly preferably 15 to 35 wt%, very particularly preferably 20 to 25 wt%.
19. The process of any of the preceding embodiments, wherein at least 90% of the particles of the expanded graphite have a particle size of at least 200 microns.
20. The process of any of the preceding embodiments, wherein Component H is selected from the group consisting of diglycerol ester and glycerol monostearate.
21. The process of any of the preceding embodiments, wherein the second polymer further comprises 0 to 10.0 wt% of one or more further additives selected from the group consisting of demolding agents, flame retardants, anti-dripping agents, antioxidants, inorganic pigments, carbon black, dyes, inorganic fillers, titanium dioxide, silicates, talc and barium sulfate.
22. A process having the features listed in all of the preceding embodiments.
23. A process to manufacture a molded thermoplastic part by injection molding, the process comprising:
   heating the mold cavity surface to a temperature greater than 70 °C;
   injecting a first polymer into a mold at a cavity surface temperature Ti1, the first polymer having a melt temperature Tm1 and a thermal conductivity Tc1; injecting a second polymer into the mold at a cavity surface temperature Ti2, the second polymer having a melt temperature Tm2 and a thermal conductivity Tc2; and
   cooling the mold to a temperature less than Tm1,
   wherein Tc2 is greater than Tc1,
   wherein Ti1 is between 70 °C and 100 °C, preferably 80 °C and 100 °C,
   wherein the cavity pressure is between 10 and 200 MPa, preferably between 20 and 150 MPa, and
   wherein Tm2 is between 200 °C and 400 °C, preferabl y 250 °C and 340 °C.

## Claims

1. A process to manufacture a molded thermoplastic part by injection molding, the process comprising:
heating the mold cavity surface to a temperature greater than 70 °C;
injecting a first polymer into a mold at a cavity surface temperature Ti1, the first polymer having a melt temperature Tm1 and a thermal conductivity Tc1;
injecting a second polymer into the mold at a cavity surface temperature Ti2, the second polymer having a melt temperature Tm2 and a thermal conductivity Tc2; and
cooling the mold to a temperature less than Tm1, and
wherein Tc2 is greater than Tc1,
wherein there is no cooling step between injecting the first polymer and injecting the second polymer.

2. The process of Claim 1, wherein the first polymer has a Vicat temperature Tv1, and Ti1 is between Tv1 - 40 °C and Tv1 + 40 °C.

3. The process of Claim 1 or 2, wherein the second polymer has a Vicat temperature Tv2, and Ti2 is between Tv2 - 40 °C and Tv2 + 40 °C.

4. The process of one of the preceding Claims, wherein Ti1 is between 80 °C and 100 °C.

5. The process of one of the preceding Claims, wherein Tm2 is between 200 °C and 400 °C.

6. The process of one of the preceding Claims, wherein the thermal conductivity of the first polymer is 0.1 to 0.3 W/ (m*K), determined according to ISO 22007-2.

7. The process of one of the preceding Claims, wherein the thermal conductivity of the second polymer is 1 to 40 W/ (m*K), determined according to ISO 22007-2.

8. The process of one of the preceding Claims, wherein the first polymer comprises:
A) 30 - 90 parts by wt. of aromatic polycarbonate and/or aromatic polyester carbonate,
B) 0 - 50 parts by wt. of rubber-modified graft polymer and/or vinyl copolymer,
C) 0 - 50.0 parts by wt. of polyester,
D) 5.0 - 50.0 parts by wt. of inorganic filler with a grain shape chosen from the group which includes spherical / cubic, tabular / discus-shaped and lamellar geometries,
E) 0 - 5.0 parts by wt. of further conventional polymer additives,
wherein all the parts by weight stated above are standardized such that the sum of the parts by weight of all components A+B+C+D+E in the composition is 100.

9. The process of one of the preceding Claims, wherein the second polymer comprises:
F) at least one semicrystalline thermoplastic which is present in an amount ranging from 90 wt.% to 30 wt.% of the composition of the second polymer,
G) a thermally conductive additive present in an amount ranging from 10 wt.% to 70 wt.% of the composition of the present invention,
H) optionally, a flow enhancer in an amount ranging from 0.2 wt.% to 3.0 wt.%,
I) optionally, 0 to 1.0 wt.% of a heat stabilizer and/or transesterification stabilizer,
J) optionally, a phosphorus compound, in an amount of 0.5 to 10 wt.%, and
K) optionally, an ethylene/alkyl (meth)acrylate copolymer in an amount of 0.01 to 5 wt.%.

10. The process of Claim 9, wherein Component F is aromatic polycarbonate, present in an amount ranging from 20 to 89.8 wt%.

11. The process of Claim 9, wherein Component G is graphite, present in an amount ranging from 10 to 35 wt%.

12. The process of Claim 11, wherein at least 90% of the particles of the expanded graphite have a particle size of at least 200 microns.

13. The process of one of the preceding Claims, wherein Component H is selected from the group consisting of diglycerol ester and glycerol monostearate.

14. The process of one of the preceding Claims, wherein the second polymer further comprises 0 to 10.0 wt% of one or more further additives selected from the group consisting of demolding agents, flame retardants, anti-dripping agents, antioxidants, inorganic pigments, carbon black, dyes, inorganic fillers, titanium dioxide, silicates, talc, barium sulfate.

## Patentansprüche

1. Verfahren zur Herstellung eines thermoplastischen Formteils durch Spritzgießen, wobei das Verfahren Folgendes umfasst:
das Erwärmen der Oberfläche des Formenhohlraums auf eine Temperatur vom mehr als 70 °C;
das Einspritzen eines ersten Polymers in eine Form bei einer Hohlraumoberflächentemperatur Ti1, wobei das erste Polymer eine Schmelztemperatur Tm1 und eine Wärmeleitfähigkeit Tc1 aufweist;
das Einspritzen eines zweiten Polymers in die Form bei einer Hohlraumoberflächentemperatur Ti2, wobei das zweite Polymer eine Schmelztemperatur Tm2 und eine Wärmeleitfähigkeit Tc2 aufweist; und
das Kühlen der Form auf eine Temperatur, die niedriger als Tm1 ist, und
wobei Tm2 höher als Tc1 ist,
wobei es zwischen dem Einspritzen des ersten Polymers und dem Einspritzen des zweiten Polymers keinen Kühlschritt gibt.

2. Verfahren nach Anspruch 1, wobei das erste Polymer eine Vicat-Temperatur Tv1 aufweist und Ti1 zwischen Tv1 - 40 °C und Tv1 + 40 °C liegt.

3. Verfahren nach Anspruch 1 oder 2, wobei das zweite Polymer eine Vicat-Temperatur Tv2 aufweist und Ti2 zwischen Tv2 - 40 °C und Tv2 + 40 °C liegt.

4. Verfahren nach einem der vorhergehenden Ansprüche, wobei Ti1 zwischen 80 °C und 100 °C liegt.

5. Verfahren nach einem der vorhergehenden Ansprüche, wobei Tm2 zwischen 200 °C und 400 °C liegt.

6. Verfahren nach einem der vorhergehenden Ansprüche, wobei die gemäß ISO 22007-2 bestimmte Wärmeleitfähigkeit des ersten Polymers 0,1 bis 0,3 W/(m*K) beträgt.

7. Verfahren nach einem der vorhergehenden Ansprüche, wobei die gemäß ISO 22007-2 bestimmte Wärmeleitfähigkeit des zweiten Polymers 1 bis 40 W/(m*K) beträgt.

8. Verfahren nach einem der vorhergehenden Ansprüche, wobei das erste Polymer Folgendes umfasst:
A) 30 - 90 Gew.-Teile eines aromatischen Polycarbonats und/oder eines aromatischen Polyestercarbonats,
B) 0 - 50 Gew.-Teile eines kautschukmodifizierten Pfropfpolymers und/oder Vinyl-Copolymers,
C) 0 - 50,0 Gew.-Teile Polyester,
D) 5,0 - 50,0 Gew.-Teile eines anorganischen Füllmittels mit einer Kornform, die ausgewählt ist aus der Gruppe, die kugelförmige /kubische, tafelförmige / diskusförmige und blättchenförmige Geometrien einschließt,
E) 0 - 5,0 Gew.-Teile weitere herkömmliche Polymeradditive,
wobei alle oben aufgeführten Gewichtsteile standardisiert sind, sodass die Summe der Gewichtsteile aller Komponenten A+B+C+D+E in der Zusammensetzung 100 beträgt.

9. Verfahren nach einem der vorhergehenden Ansprüche, wobei das zweite Polymer Folgendes umfasst:
F) mindestens einen halbkristallinen Thermoplasten, der in einer von 90 Gew.-% bis 30 Gew.-% reichenden Menge der Zusammensetzung des zweiten Polymers vorhanden ist,
G) ein wärmeleitendes Additiv, das in einer von 10 Gew.-% bis 70 Gew.-% reichenden Menge der Zusammensetzung der vorliegenden Erfindung vorhanden ist,
H) gegebenenfalls einen Fließverbesserer in einer von 0,2 Gew.-% bis 3,0 Gew.-% reichenden Menge,
I) gegebenenfalls 0 bis 1,0 Gew.-% eines Wärmestabilisators und/oder Umesterungsstabilisators,
J) gegebenenfalls eine Phosphorverbindung in einer Menge von 0,5 bis 10 Gew.-% und
K) gegebenenfalls ein Ethylen/Alkyl(meth)acrylat-Copolymer in einer Menge von 0,01 bis 5 Gew.-%.

10. Verfahren nach Anspruch 9, wobei Komponente F ein aromatisches Polycarbonat ist, das in einer von 20 bis 89,8 Gew.-% reichenden Menge vorhanden ist.

11. Verfahren nach Anspruch 9, wobei Komponente G Graphit ist, der in einer von 10 bis 35 Gew.-% reichenden Menge vorhanden ist.

12. Verfahren nach Anspruch 11, wobei mindestens 90 % der Partikel des Blähgraphits eine Partikelgröße von mindestens 200 µm aufweisen.

13. Verfahren nach einem der vorhergehenden Ansprüche, wobei Komponente H ausgewählt ist aus der Gruppe bestehend aus Diglycerinester und Glycerinmonostearat.

14. Verfahren nach einem der vorhergehenden Ansprüche, wobei das zweite Polymer weiterhin 0 bis 10,0 Gew.-% eines oder mehrerer weiterer Additive umfasst, die ausgewählt sind aus der Gruppe bestehend aus Entformungsmitteln, flammhemmenden Mitteln, Antitropfmitteln, Antioxidantien, anorganischen Pigmenten, Ruß, Farbstoffen, anorganischen Füllmitteln, Titandioxid, Silicaten, Talk, Bariumsulfat.

## Revendications

1. Procédé pour la fabrication d'une pièce thermoplastique moulée par moulage par injection, le procédé comprenant :
le chauffage de la surface de cavité de moule à une température supérieure à 70 °C ;
l'injection d'un premier polymère dans un moule à une température de surface de cavité Ti1, le premier polymère possédant une température de fusion Tm1 et une conductivité thermique Tc1 ;
l'injection d'un deuxième polymère dans le moule à une température de surface de cavité Ti2, le deuxième polymère possédant une température de fusion Tm2 et une conductivité thermique Tc2 ; et
le refroidissement du moule à une température inférieure à Tm1, et
Tc2 étant supérieure à Tc1,
dans laquelle il n'y a pas d'étape de refroidissement entre l'injection du premier polymère et l'injection du deuxième polymère.

2. Procédé selon la revendication 1, le premier polymère possédant une température Vicat Tv1, et Ti1 étant entre Tv1 - 40 °C et Tv1 + 40 °C.

3. Procédé selon la revendication 1 ou 2, le deuxième polymère possédant une température Vicat Tv2, et Ti2 étant entre Tv2 - 40 °C et Tv2 + 40 °C.

4. Procédé selon l'une des revendications précédentes, Ti1 étant comprise entre 80 °C et 100 °C.

5. Procédé selon l'une des revendications précédentes, Tm2 étant comprise entre 200 °C et 400 °C.

6. Procédé selon l'une des revendications précédentes, la conductivité thermique du premier polymère étant de 0,1 à 0,3 W/(m*K), déterminée selon la norme ISO 22007-2.

7. Procédé selon l'une des revendications précédentes, la conductivité thermique du deuxième polymère étant de 1 à 40 W/(m*K), déterminée selon la norme ISO 22007-2.

8. Procédé selon l'une des revendications précédentes, le premier polymère comprenant :
A) 30 à 90 parties en poids d'un polycarbonate aromatique et/ou d'un polyestercarbonate aromatique,
B) 0 à 50 parties en poids d'un polymère greffé et/ou copolymère vinylique, modifié par un caoutchouc,
C) 0 à 50,0 parties en poids d'un polyester,
D) 5,0 à 50,0 parties en poids d'une charge inorganique dotée d'une forme de grain choisie dans le groupe qui comprend des géométries sphériques/cubiques, tabulaires/de disque et lamellaires,
E) 0 à 5,0 parties en poids d'additifs de polymère habituels supplémentaires,
toutes les parties en poids mentionnées ci-dessus étant normalisées de sorte que la somme de toutes les parties en poids de tous les composants A + B + C + D + E dans la composition soit 100.

9. Procédé selon l'une des revendications précédentes, le deuxième polymère comprenant :
F) au moins un thermoplastique semi-cristallin qui est présent en une quantité dans la plage de 90 % en poids à 30 % en poids de la composition du deuxième polymère,
G) un additif thermiquement conducteur présent en une quantité dans la plage de 10 % en poids à 70 % en poids de la composition de la présente invention,
H) éventuellement, un agent d'amélioration de l'écoulement en une quantité dans la plage de 0,2 % en poids à 3,0 % en poids,
I) éventuellement, 0 à 1,0 % en poids d'un stabilisant thermique et/ou d'un stabilisant de transestérification,
J) éventuellement, un composé du phosphore, en une quantité de 0,5 à 10 % en poids, et
K) éventuellement, un copolymère d'éthylène/(méth)acrylate d'alkyle en une quantité de 0,01 à 5 % en poids.

10. Procédé selon la revendication 9, le composant F étant un polycarbonate aromatique, présent en une quantité dans la plage de 20 à 89,8 % en poids.

11. Procédé selon la revendication 9, le composant G étant un graphite, présent en une quantité dans la plage de 10 à 35 % en poids.

12. Procédé selon la revendication 11, au moins 90 % des particules du graphite expansé possédant une taille de particule d'au moins 200 microns.

13. Procédé selon l'une des revendications précédentes, le composant H étant choisi dans le groupe constitué par un ester de diglycérol et le monostéarate de glycérol.

14. Procédé selon l'une des revendications précédentes, le deuxième polymère comprenant en outre 0 à 10,0 % en poids d'un ou plusieurs additifs supplémentaires choisis dans le groupe constitué par des agents de démoulage, des retardateurs de flamme, des agents anti-goutte, des antioxydants, des pigments inorganiques, un noir de carbone, des colorants, des fibres inorganiques, un dioxyde de titane, des silicates, du talc, le sulfate de baryum.
